(19) **Europäisches Patentamt**
European Patent Office
Office européen des brevets

(11) **EP 1 337 998 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(21) Anmeldenummer: **01998966.4**

(22) Anmeldetag: **23.11.2001**

(51) Int Cl.:
*G10K 11/30* (2006.01)    *G01F 1/66* (2006.01)

(86) Internationale Anmeldenummer:
**PCT/DE2001/004426**

(87) Internationale Veröffentlichungsnummer:
**WO 2002/045074 (06.06.2002 Gazette 2002/23)**

(54) **ULTRASCHALLWANDLER UND ULTRASCHALL-DURCHFLUSSMESSER**

ULTRASONIC TRANSDUCER AND ULTRASONIC FLOWMETER

TRANSDUCTEUR D'ULTRASONS ET DEBITMETRE A ULTRASONS

(84) Benannte Vertragsstaaten:
**AT BE CH CY DE DK ES FI FR GB GR IE IT LI LU MC NL PT SE TR**

(30) Priorität: **30.11.2000 DE 10059566**

(43) Veröffentlichungstag der Anmeldung:
**27.08.2003 Patentblatt 2003/35**

(73) Patentinhaber: **Landis+Gyr GmbH**
**90459 Nürnberg (DE)**

(72) Erfinder: **PAPE, Detlef**
**70199 Stuttgart (DE)**

(74) Vertreter: **Bauerschmidt, Peter et al**
**Rau, Schneck & Hübner**
**Patentanwälte**
**Königstrasse 2**
**90402 Nürnberg (DE)**

(56) Entgegenhaltungen:
**GB-A- 738 941**        **GB-A- 2 011 219**
**US-A- 4 375 767**

• **PATENT ABSTRACTS OF JAPAN vol. 2000, no. 14, 5. März 2001 (2001-03-05) -& JP 2000 304581 A (FUJI ELECTRIC CO LTD), 2. November 2000 (2000-11-02)**

## Beschreibung

Die Erfindung bezieht sich auf einen Ultraschallwandler der im Oberbegriff des Anspruchs 1 genannten Art. Die Erfindung bezieht sich ferner auf einen Ultraschall-Durchflussmesser gemäß der im Oberbegriff des Anspruchs 11 genannten Art.

Solche Ultraschallwandler werden zum Abstrahlen von Ultraschall in ein Medium und zum Empfang von Ultraschallwellen aus dem Medium verwendet. Insbesondere dienen sie zur Erfassung der Strömungsgeschwindigkeit des Mediums bei Durchflussmessern, die in einem Rohrsystem durch Messen der Durchflussgeschwindigkeit die Bezugsmenge eines strömenden Mediums und dadurch die vom Medium transportierte Energie, insbesondere die Wärmeenergie, ermitteln. Die Durchflussmesser ermöglichen dem Rohrsystembetreiber, dem Bezüger die aufgrund der Messwerte berechnete Bezugsmenge in Rechnung zu stellen.

Die DE-PS 899 574, DE-AS 29 34 031 und die US-PS 3 555 311 zeigen den prinzipiellen Aufbau von Ultraschallwandlern. Ein flächiges ebenes Piezomaterial ist zwischen zwei Elektrodenflächen angeordnet und wird durch ein elektrisches Wechselfeld, das zwischen den beiden Elektrodenflächen angelegt ist, zu Dickenschwingungen im Gleichtakt mit dem elektrischen Wechselfeld so angeregt, dass Schallwellen senkrecht zu den Elektrodenflächen in einem engen Bündel abgestrahlt werden. Fallen Ultraschallwellen senkrecht auf die Elektrodenflächen ein, wird das Piezomaterial zu Dickenschwingungen angeregt und erzeugt auf den Elektrodenflächen ein elektrisches Signal mit der Frequenz der Schallwellen. Das mit den Elektrodenflächen belegte Piezomaterial ist in einem gegen das Medium abgedichteten Wandlergehäuse so untergebracht, dass das Piezomaterial die Ultraschallwellen senkrecht von einer Abstrahlfläche des Wandlergehäuses abstrahlt.

Aus der WO86/02723 sind paarweise Anordnungen der Ultraschallwandler im strömenden Medium bekannt, die parallel zur Strömungsrichtung einander gegenseitig Ultraschallwellenpakete zusenden und die vom gegenüberliegenden Ultraschallwandler ausgesandten Ultraschallwellenpakete empfangen. Die Laufzeiten der Ultraschallwellenpakete im Medium stromaufwärts und stromabwärts unterscheiden sich wegen der Mitführung der Schallwellen durch das Medium und erlauben die Berechnung der Strömungsgeschwindigkeit bzw. der Durchflussmenge. Die Oberflächenstruktur des Ultraschallwandlers beeinflusst die Schallabstrahlung, insbesondere die Bündelung des Schalls. Diese einfache Anordnung der Ultraschallwandler weist den Nachteil eines hohen Strömungswiderstandes auf.

Die DE-OS 40 10 148 A1 beschreibt einen Durchflussmesser für Gase und Flüssigkeiten mit einem wesentlich geringeren Strömungswiderstand. Die Ultraschallwandler sind ausserhalb des Messrohrquerschnitts in Nischen der Messrohrwand angeordnet. Diese Anordnung verlangt einen schräg zur Achse des Messrohrs einfallenden Strahl der Ultraschallwellen, der erst nach mehrfacher Spiegelung an der Messrohrwand auf den empfangenden Ultraschallwandler auftrifft. Das Bündel der Ultraschallwellen wird auf einem V- bzw. W-förmigen Weg durch das Messrohr geführt. Dies ergibt auch einen guten Mittelwert der inhomogenen Strömungsgeschwindigkeit. Die genaue Ausrichtung der senkrecht durch das Fenster abstrahlenden Ultraschallwandler verteuern das Gehäuse des Durchflussmessers.

Diesen Nachteil behebt ein in der DE 30 20 282 A1 beschriebener Interdigitalwandler als Ultraschallerzeuger. Die Interdigitalwandler sind flächige Stücke aus einem keramischen Piezomaterial, das auf der einen Seite zwei mit einer Wechselspannung beaufschlagten Elektroden mit eine Interdigitalstruktur aufweisen. Bei dieser Struktur greifen die Elektroden kammartig ineinander, ohne sich jedoch zu berühren. Die andere, dem Medium zugewandte Seite ist mit einer vollflächigen Masse - Elektrode belegt. Beim Anlegen von zwei gegeneinander um 180° phasenverschobenen Wechselspannungen gleicher Frequenz f zwischen den beiden Elektroden einerseits und der Masse - Elektrode andererseits werden durch die Interdigitalstruktur bedeckten Zonen des Piezomaterials so zu Dickenschwingungen angeregt, dass durch die Masse - Elektrode hindurch Ultraschallwellen unter einem Winkel zur Senkrechten auf die Masse - Elektrode abgestrahlt werden. Der Abstrahlwinkel hängt von der Frequenz f und der Phasenverschiebung der Wechselspannungen und der Periodizität der Interdigitalstruktur ab. Die Interdigitalwandler verteuern die Durchfussmesser erheblich.

Weiter ist eine Ultraschallsonde aus der GB 2 011 219 A bekannt, die in der Medizinaltechnik zur abbildenden Untersuchung des Innern von lebenden Körpern Verwendung findet. Die Kontaktfläche der Ultraschallsonde gegen die Körperoberfläche ist gewellt, damit unerwünschte Reflexionen an der Grenzfläche Sonde - Körperoberfläche unterdrückt werden.

Ein weiterer Ultraschallwandler und dazugehöriger Durchflussmesser sind aus JP-A-2000304581 bekannt.

Die Aufgabe der Erfindung ist, einen kostengünstigen Ultraschallwandler und zugehörigen Durchflussmesser zu schaffen, wobei eine schiefe Abstrahlung der Ultraschallwellen in Bezug zur Außenfläche Ultraschallwandlers möglich sein soll. Ferner ist eine Verwendung des Ultraschallwandlers anzugeben.

Die Lösung dieser Aufgabe bezüglich des Ultraschallwandlers ist eine entscheidende Voraussetzung für die Herstellung eines wirklich kostengünstigen Ultraschall - Durchflussmessers.

Die Aufgabe wird durch die Merkmale des Anspruchs 1 gelöst. Vorteilhafte Ausgestaltungen ergeben sich aus den abhängigen Ansprüchen. Eine Lösung bezüglich der Verwendung ist im Anspruch 8 angegeben. Vorteilhafte Ausgestaltungen sind in den übrigen Ansprüchen angegeben.

Auf diese Weise ist am Ultraschallwandler ein Phasen-Beugungsgitter gebildet, das eine schräge Abstrahlung der Ultraschallwellen ermöglicht. Durch entsprechende Dimensionierung der Bereiche oder Wahl ihrer Materialien kann die Abstrahlung unter einem vorbestimmten Beugungswinkel $\pm\alpha$ erzielt werden.

Bevorzugt sind die Bereiche als einander abwechselnde Rippen und Furchen ausgebildet. Ausgehend davon, dass die Rippen eine Höhe h und einen Abstand d aufweisen und durch die Furchen getrennt sind, und dass der Ultraschallerzeuger in das Medium abgestrahlte Ultraschall durch das Phasen-Beugungsgitter um einen vorbestimmten Beugungswinkel $\pm\alpha$, aus etwa der Richtung eines Lots auf die abstrahlende Oberfläche abgelenkt ist, bestimmen im wesentlichen die Materialien der Gehäusewand, insbesondere die der Rippen und der Furchen, sowie die Gitterkonstanten (Abstand d, Höhe h usw.) den Beugungswinkel $\pm\alpha$ des Phasen-Beugungsgitter (14). Bei einem direkten Kontakt mit dem von Interesse.

Nachfolgend werden Ausführungen, weitere Vorteile und Details der Erfindung anhand der Zeichnung und Ausführungsbeispielen näher erläutert. Es zeigen:

FIG 1    einen Ultraschallwandler im Querschnitt,
FIG 2    ein symmetrisches Phasen-Beugungsgitter im Querschnitt,
FIG 3    der Ultraschallwandler in Draufsicht,
FIG 4    ein asymmetrisches Phasen-Beugungsgitter im Quer schnitt,
FIG 5    ein asymmetrisches Stufen-Phasen-Beugungsgitter im Querschnitt,
FIG 6    ein fokussierendes Phasen-Beugungsgitter in Draufsicht,
FIG 7    eine andere Anordnung des Phasen-Beugungsgitter im Ultraschallwandler, und
FIG 8    Durchflussmesser im Querschnitt.

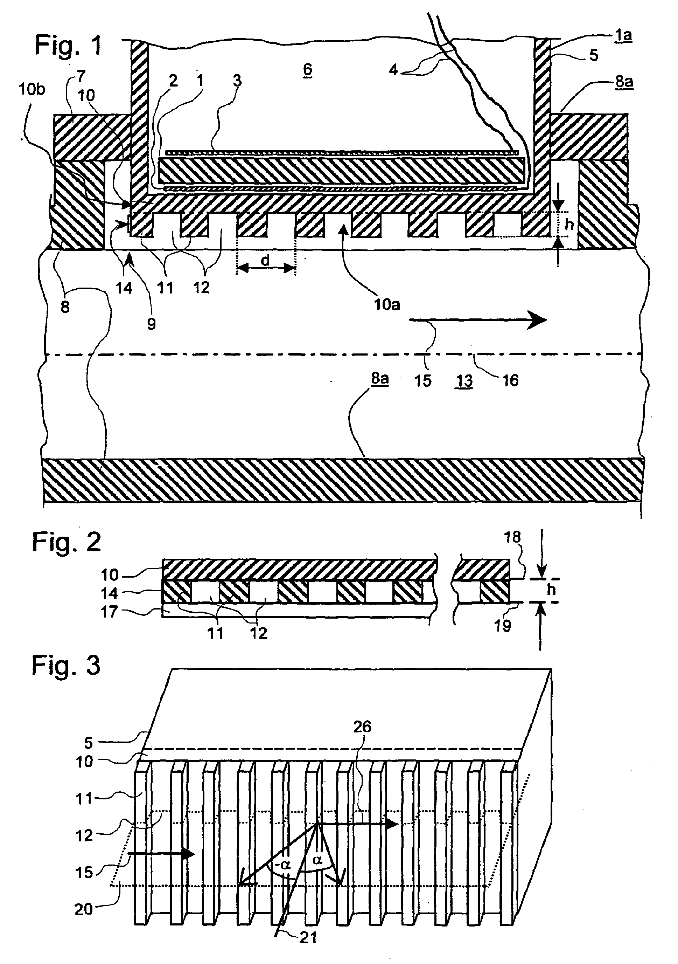

Die FIG 1 zeigt einen Ultraschallwandler 1a, der in einem Messrohr angeordnet ist, in einer Schnittdarstellung. In seinem Inneren weist er als Ultraschallerzeuger beispielhaft ein Piezoelement auf.

In der FIG 1 bedeuten 1 ein Piezoelement, 2 und 3 Elektroden, 4 elektrische Zuleitungen zu den Elektroden 2 und 3, 5 ein Wandlergehäuse, 6 ein Innenraum des Wandlergehäuses 5, 7 ein Flansch des Wandlergehäuses 5, 8 das Messrohr eines Durchflussmessers 8a im Querschnitt, 9 eine Öffnung im Messrohr 8, 10 ein sogenanntes "Ultraschall durchlässiges Fenster". Rippen 11 und Furchen 12 bilden auf einer einem strömenden Medium 13 zugewandten Seite des Fensters 10 ein akustisches Beugungsgitter 14. Das Medium 13 weist eine Schallgeschwindigkeit $C_M$ auf.

Das Wandlergehäuse 5 ist vorliegend beispielhaft topfförmig ausgebildet und mit einer Kreis- oder Polygonfläche als Grundfläche gegen das Medium 13 abgeschlossen. Die Kreis- oder Polygonfläche ist das Ultraschall durchlässige Fenster 10, dessen Außenfläche 10a mit dem Medium 13 in Kontakt steht. Das Fenster 10 ist von einer Gehäusewand 10b des Wandlergehäuses 5 gebildet. Das Beugungsgitter 14 ist auf einer der beiden Flächen (Vorder- oder Rückseite) des Fensters 10 angeordnet. In der Zeichnung der FIG 1 ist das Beugungsgitter 14 auf der dem Medium 13 zugewandten Seite des Fensters 10 plaziert.

Das Wandlergehäuse 5 ist mit dem Fenster 10 und dem Beugungsgitter 14 voran in die Öffnung 9 des Messrohrs 8 eingesetzt. Das Beugungsgitter 14 ist somit in direktem akustischen Kontakt mit dem Medium 13. Der Flansch 7 positioniert das Wandlergehäuse 5 in der Öffnung 9 und ist dicht mit einem Flansch des Messrohrs 8 so verbunden, dass das in der Fliessrichtung 15 parallel zur Messrohrachse 16 strömende Medium 13 nicht aus dem Messrohr 8 austreten kann.

Das Piezoelement 1, das vorliegend beispielhaft und bevorzugt als Ultraschallerzeuger dient, ist ein flächiges Materialstück mit einer Kreis- oder Polygonform und besteht aus einer elektrisch polarisierten Keramik oder aus einem elektrisch polarisierten Kunststoff, z.B. Polyvinylfluorid (PVF), Polyvinylidenfluorid (PVDF). Die gegenüberliegenden parallelen Flächen des Materialstücks sind mit den Elektroden 2 und 3 belegt; beispielsweise erfolgt dies durch Aufdampfen von Gold, Aluminium oder einem andern Leitermaterial auf die parallelen Flächen des Materialstücks. Das Piezoelement 1 schmiegt sich mit der ersten Elektrode 2 an die vom Medium 13 abgewandten Seite des Fensters 10. Dies gewährleistet einen guten Übergang der Ultraschallwellen vom Piezoelement 1 durch das Fenster 10 und das Beugungsgitter 14 hindurch ins Medium 13.

In einem Material mit der Schallgeschwindigkeit C pflanzen sich die akustischen Wellen mit der Wellenlänge $\lambda = C/f$ fort. Die Ultraschallwellen werden senkrecht zu einer dem Fenster 10 zugewandten und mit der ersten Elektrode 2 bedeckten Oberfläche des Piezoelements 1 abgestrahlt. Der Innenraum 6 ist entweder mit Luft gefüllt oder mit einem Dämm-Material vergossen. Eine Ultraschallabstrahlung durch die zweite Elektrode 3 findet daher im wesentlichen nicht statt.

Die Zuleitungen 4 verbinden die Elektroden 2 und 3 mit einem hier nicht gezeigten Auswertegerät, das im wesentlichen entsprechend dem Stand der Technik ausgeführt ist, ausserhalb des Wandlergehäuses 9. Das Auswertegerät beaufschlagt beispielsweise während einer Sendephase die Elektroden 2 und 3 über die Zuleitungen 4 mit einer elektrischen Wechselspannung der Frequenz f, damit das Piezoelement 1 im Wechselfeld der Frequenz f zu Dickenschwingungen angeregt wird.

Während einer der Sendephase unmittelbar folgenden Empfangsphase erzeugen die vom Medium 13 durch das Fenster 10 in das Piezoelement 1 eindringenden Ultraschallwellen zwischen den beiden Elektroden 2, 3 Änderungen des elektrischen Potentials mit der Frequenz f des Ultraschalls. Diese Potentialänderungen gelangen als elektrische Signale über die Zuleitungen 4 in das Auswertegerät. Die für die Erzeugung von Ultraschall verwendete Frequenz f weist typisch einen Wert im Bereich zwischen ca. 50 KHz und 10 MHz auf. Ist Wasser das strömende Medium 13, werden Frequenzen f von ca. 1 MHz (0,9 MHz bis 1,1 MHz) bevorzugt verwendet.

Die dem Medium 13 zugewandte Seite des Fensters 10 weist die in einem regelmässigen Abstand d angeordneten Rippen 11 der Höhe h auf. Die zwischen den Rippen 11 abgesenkten Furchen 12 sind in einer Ausführung mit dem Medium 13 erfüllte Vertiefungen oder sind in einer anderen Ausführungen mit einem festen Material ausgefüllt. In einer Ausführung des Beugungsgitters 14 weisen die Rippen 11 und die Furchen 12 eine Profilform mit einem rechteckigen oder trapezförmigen Querschnitt auf, wobei das Tastverhältnis das Verhältnis der Querschnittsfläche der Rippen 11 zu der Querschnittsfläche der Furchen 12 1:1 ist.

Die Schallgeschwindigkeit in den Furchen 12, $C_M$ bzw. $C_2$, unterscheidet sich von der Schallgeschwindigkeit $C_1$ in den Rippen 11. Die Rippen 11 und Furchen 12 bilden für die Ultraschallwellen das vor dem Fenster 10 angeordnete Phasen- Beugungsgitter 14, nachfolgend kurz Beugungsgitter 14 genannt, mit Gitterkonstanten, wie Schallgeschwindigkeiten $C_1$, $C_M$ bzw. $C_2$ die Profilform, die Höhe h und der Abstand d. Die Ausführung des Beugungsgitters 14 mit den mit festem Material verfüllten Furchen 12 besitzt eine glatte Grenzfläche zum Medium 13 und beeinflusst daher mit den Rippen 11 die Strömung des Mediums 13 nicht.

Die FIG 2 zeigt das zwischen dem Fenster 10 und einer Schutzschicht 17 angeordnete Beugungsgitter 14. Grenzflächen 18 und 19 des Beugungsgitters 14 gegen das Fenster 10 und gegen die Schutzschicht 17 sind bevorzugt parallel. Das Fenster 10 und die Schutzschicht 17 weisen gleichmässige Stärken auf. Die Grenzflächen 18, 19 sind rein gedankliche Konstruktionen, um das Beugungsgitter 14 in der Darstellung der FIG 2 gegen das Fenster 10 und die Schutzschicht 17 abzugrenzen.

Um einen optimalen akustischen Kontakt zwischen den Rippen 11 und dem Fenster 10 zu erzielen, sind die Furchen 12 mit Vorteil direkt in das Material des Fensters 10 geschnitten. Das Beugungsgitter 14 ist in einer Ausführung auf der dem Medium 13 (FIG 1) zugewandten Seite mit einer Schutzschicht 17 überzogen, das die Rippen 11 und die Furchen 12 überdeckt.

Mit Vorteil ist die Schutzschicht 17 aus dem gleichen Material wie dasjenige, das die Furchen 12 ausfüllt. Die Schallgeschwindigkeit der gleichmässig dicken Schutzschicht 17 beeinflusst das Beugungsverhalten nicht. Daher kann die Schutzschicht 17 auch aus einem anderen Material hergestellt sein, beispielsweise um die akustische Impedanz des Ultraschallwandlers an die des Mediums 13, z.B. bei gasförmigen Medien 13, anzupassen.

Die über den Rippen 11 gemessene Dicke der Schutzschicht 17 ist in einer Ausführung kleiner als ein Viertel der Wellenlänge $\lambda$ der Ultraschallwellen im Material der Schutzschicht 17, um beim Übergang ins Medium 13 eine zusätzliche Brechung der Ultraschallwellen zu vermeiden. Auf der rechten Seite der Darstellung in der FIG 2 sind die Furchen 12 mit einem Material so verfüllt, dass die dem Medium 13 zugewandten freien Oberflächen des Verfüllmaterials mit den freien Oberflächen der Rippen 11 bündig sind.

In Zonen der Rippen 11 weist das Material die Schallgeschwindigkeit $C_1$ auf, während in Zonen der Furchen 12 je nach der Ausführung des Beugungsgitters 14 die Schallgeschwindigkeit $C_M$ des Mediums 13 bzw. die Schallgeschwindigkeit $C_2$ des die Furchen 12 füllenden Materials wirksam ist. Die in ebenen Wellenfronten durch das Fenster 10 tretenden Ultraschallwellen erleiden beim Durchgang durch das Beugungsgitter 14 hindurch auf der durch die Höhe h bestimmten Strecke von den Schallgeschwindigkeiten $C_1$ und $C_M$ bzw. $C_2$ vorbestimmte, sich unterscheidende Phasenverschiebungen. Beim Austritt aus dem Beugungsgitter 14 weisen daher die Ultraschallwellen keine ebenen Wellenfronten mehr auf.

Aus der Differenz der Phasenverschiebung der Ultraschallwellen in den Rippen 11 und der Phasenverschiebung der Ultraschallwellen in den Furchen 12 berechnet sich die Phasendifferenz $\phi$. Sie hängt von der Ultraschallfrequenz f, der Höhe h der Rippen 11 und den beiden Schallgeschwindigkeiten $C_1$ und $C_M$ bzw. $C_2$ ab. Beim Austritt aus dem Beugungsgitter 14 beträgt die Phasendifferenz $\phi$ der Ultraschallwellen zwischen den Zonen der Rippen 11 und den Zonen der Furchen 12:

$$\phi = 2\pi hf * (1/C_1 - 1/C_M) \text{ bzw.} \qquad [1]$$

$$\phi = 2\pi hf * (1/C_1 - 1/C_2). \qquad [2]$$

Da die Zonen der Rippen 11 und der Furchen 12 abwechselnd und regelmässig mit einer Spatialfrequenz $d^{-1}$

angeordnet sind, treten Beugungseffekte auf.

In der FIG 3 weisen das Fenster 10 und das Wandlergehäuse 5 beispielhaft einen rechteckigen Querschnitt auf. Zwischen dem Fenster 10 und dem Medium 13 (Fig. 1) ist das Beugungsgitter 14 (Fig. 2) angeordnet. Das Medium 13 füllt die Furchen 12 und weist die Fliessrichtung 15 quer zu den Furchen 12 auf. Eine Beugungsebene 20 ist in der Zeichnung der FIG 3 punktiert dargestellt. Sie schneidet die Rippen 11 und Furchen 12 unter einem rechten Winkel und enthält ein Lot 21 auf die Ebene des Fensters 10.

Beträgt die Phasendifferenz $\phi = (2n + 1) * \pi$, wobei $n = 0, 1, 2$, usw. ist, löschen sich die längs des Lots 21 gerichteten Ultraschallwellen gerade aus. In Abhängigkeit vom Abstand d und der Frequenz f erfahren die Ultraschallwellen in Richtungen, bei denen die Gesamtphasendifferenz $\phi = 2n\pi$ ist, eine Verstärkung der Intensität, d.h. die Ultraschallwellen werden gebeugt. Die Richtungen dieser intensiven Ultraschallwellen schliessen mit dem Lot 21 einen Beugungswinkel $\pm\alpha$ ein. Der Beugungswinkel berechnet sich gemäss

$$\sin(\alpha) \;=\; m \,*\, \lambda/d, \qquad\qquad\qquad [3]$$

wobei m ungeradzahlig, beispielsweise $m = \pm 1, 3, 5$ usw. ist. Unter Berücksichtigung der Phasenverschiebung $\phi$ erhält man aus der Formel [3] für das Beugungsgitter 14 erster Ordnung ($m = \pm 1$)

$$\sin(\alpha) \;=\; 2h/d \,*\, C_M|1/C_1 \,-\, 1/C_M| \;=\; 2h/d \,*\, |C_M/C_1 \,-\, 1| \qquad\qquad [4]$$

für mit dem Medium 13 erfüllten Furchen 12 bzw.

$$\sin(\alpha) \;=\; \pm|\phi/\pi \,*\, \lambda/d| \;=\; 2h/d \,*\, C_M|1/C_1 \,-\, 1/C_2|, \qquad\qquad [5]$$

wenn das die Furchen 12 füllende Material die Schallgeschwindigkeit $C_2$ besitzt.

Der Beugungswinkel $\alpha$ ist von der Frequenz f der Ultraschallwellen unabhängig, hängt jedoch von der Schallgeschwindigkeit $C_M$ im Medium 13 ab. In der Tabelle 1 sind für eine nicht abschliessende Aufzählung von verschiedenen Materialien die Schallgeschwindigkeit C für longitudinale Schwingungen aufgeführt. Die Schallgeschwindigkeit, insbesondere die von Gasen oder von flüssigen Medien 13, ändert sich mit der Temperatur. Bei Wasser beispielsweise steigt im Bereich von 10°C bis 100°C die Schallgeschwindigkeit von 1450 m/s bei 10°C bis zu einem Maximum bei 67°C von 1550 m/s um bei höheren Temperaturen wieder abzufallen.

Nachfolgend ist unter einem Abstrahlwinkel der Beugungswinkel $\pm\alpha$ zu verstehen.

Beispiel 1:

Das in der FIG 3 gezeigte Beugungsgitter 14 mit Rippen aus Aluminium mit der Schallgeschwindigkeit $C_1 = $ 6300 m/s und mit dem Medium 13 Wasser von 20°C ($C_M = $ 1480 m/s) gefüllten, parallelen und geraden Furchen 12 weist einen Abstrahlwinkel von 45° auf. Gemäss der Formel [4] ergibt sich für den Abstrahlwinkel von 45° ein Verhältnis der Höhe h zum Abstand d von 0.462. Bei einer Frequenz von f = 1 MHz beträgt die Wellenlänge $\lambda$ des Ultraschalls $\lambda$ = 1,48 mm in Wasser von 20°C. Bei einer Phasenverschiebung $\phi = \pi$ ist nach der Formel [1] die Höhe h = 0,97 mm der Abstand d = 2,10 mm. Bei einer Änderung der Wassertemperatur von 20°C auf 67°C ändert sich der Abstrahlwinkel von 45,0° auf 47,6°. Wird die Phasenverschiebung $\phi = (2n+1)\cdot\pi$ gewählt, sind das Verhältnis h/d und die Höhe h um den Faktor (2n+1) ebenfalls vergrössert.

Beispiel 2:

Das in der FIG 2 gezeigte Beugungsgitter weist beispielsweise Rippen 11 aus einem unlegierten Stahl ($C_1 = $ 5940 m/s) und mit Plexiglas ($C_2 = $ 2730 m/s) ausgefüllte Furchen 12 auf. Der Abstrahlwinkel beträgt 45° bzw. 63,4°, die Ultraschallfrequenz f = 1 MHz und das Medium 13 ist Wasser von 20°C. Für eine Phasenverschiebung $\phi = \pi$ sind nach der Formel [2] und [5] die Werte in der Tabelle 2 berechnet.

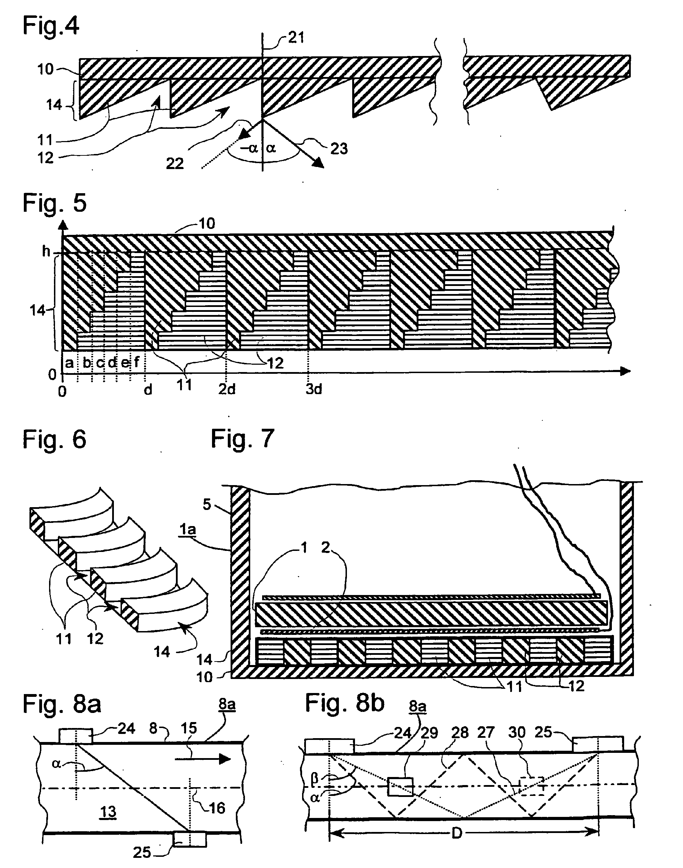

Die FIG 4 zeigt ein vor dem Fenster 10 angeordnetes asymmetrisches Beugungsgitter 14. Die Rippen 11 und die Furchen 12 weisen einen keilförmigen Querschnitt auf. In der Zeichnung der FIG 4 sind zwei Formen der keilförmigen Querschnitte gezeigt. Im Gegensatz zu den beiden symmetrischen Beugungsgittern 14 in den beiden Beispielen 1 und 2 werden die unter den Beugungswinkel $\pm\alpha$ abgestrahlten Ultraschallwellen nicht mit gleicher Intensität in die Richtungen von Pfeilen 22, 23 vom Lot 21 weggebeugt, sondern die abgestrahlten Ultraschallwellen werden bevorzugt in einer der beiden Beugungsrichtungen gebeugt. In der Darstellung der FIG 4 ist die Grösse der Intensität der abgestrahlten Ultraschallwellen durch die unterschiedliche Länge der beiden Pfeile 22, 23 dargestellt.

Der Vorteil dieser Ausführung des Beugungsgitters 14 ist eine Konzentration der abgestrahlten Ultraschallenergie auf den durch die Messstrecke führenden Weg in Richtung des längeren Pfeils 23. Beim Empfang von Ultraschallwellen aus der Richtung des längeren Pfeils 23 ist der Ultraschallwandler wegen des vorgeschalteten Beugungsgitters 14 empfindlicher als aus der Richtung des Pfeils 22. Der Ultraschallwandler weist daher eine asymmetrische Empfangscharakteristik auf.

Die FIG 5 zeigt eine andere Ausführung des asymmetrischen Beugungsgitters 14. Die Rippen 11 besitzen auf der einen Seite eine einzige Stufe von der Höhe h über dem Fenster 10. Auf der anderen Seite erfolgt die Reduktion der Höhe h nicht kontinuierlich sondern in mehreren treppenartigen Stufen.

In der Zeichnung der FIG 5 sind in jeder Gitterperiode mit der Strecke d sechs Stufen a bis f. Die Phasenverschiebung $\phi$ der Ultraschallwellen ändert sich stufenweise im Bereich der Furche 12 von Wert $\phi = 0$ in der Stufe a bis zum maximalen Wert in der Stufe f, in der z.B. $\phi = \pi$. Dies entspricht der in jeder Stufe der jeweils wirksamen Höhe des über jeder Stufe verbleibenden zweiten Materials, das die Furche 12 erfüllt. Die Beugungseigenschaften sind weitgehend dieselben, wie beim Beugungsgitter 14 der FIG 4.

Anstelle der beispielhaft gezeigten Profilformen der Rippen 11 des Beugungsgitters 14 sind für die begrenzende Fläche der Rippen 11 bzw. der Furchen 12 auch andere periodische symmetrische oder asymmetrische Funktionen für die Profilform der Rippen 11 verwendbar.

Neben den geraden parallelen Rippen 11 und Furchen 12 sind, wie aus der FIG 6 ersichtlich ist, auch Beugungsgitter 14 mit den gekrümmten Rippen 11 und Furchen 12 einsetzbar. Die Ultraschallwellen werden durch die Krümmung der Rippen 11 bzw. Furchen 12 fokussiert. Dies ist bei langen Wegen der Ultraschallwellen von einem Ultraschallwandler zum andern von Vorteil.

Eine weitere Ausführung des Ultraschallwandlers ist in der FIG 7 dargestellt. Das Beugungsgitter 14 ist auf der vom Medium abgewandten Seite des Fensters 10 im Innenraum 6 des Wandlergehäuses 5 zwischen dem Piezoelement 1 und dem Fenster 10 angeordnet. Die Furchen 12 zwischen den Rippen 11 sind mit einem festen Material mit der Schallgeschwindigkeit $C_2$ ausgefüllt. Es gelten die gleichen Überlegungen wie im Beispiel 2. An den Grenzflächen 18 (Fig. 2), 19 (Fig. 2) zwischen dem Piezoelement 1 bzw. der Elektrode 2 und der einen Oberfläche des Beugungsgitters 14 einerseits und zwischen der anderen Oberfläche des Beugungsgitters 14 und der Innenseite des Fensters 10 andererseits ist ein guter akustischer Kontakt notwendig.

Die FIG 8a und 8b zeigen die Anordnung zweier Ultraschallwandler 24, 25 am Messrohr 8, bei verschiedenen Konstruktionen des Durchflussmessers 8a mit schräger Durchschallung. Die dem Medium 13 zugewandten Beugungsgitter 14 (Fig. 2) der beiden Ultraschallwandler sind bei einer bestimmten Ausführung jeweils identisch. Die Gittervektoren 26 (Fig. 3) der beiden Beugungsgitter 14 liegen in der gemeinsamen Beugungsebene 20 (Fig. 3). Der Gittervektor 26 des einen Beugungsgitters 14 ist entgegengesetzt zum Gittervektor 26 des anderen Beugungsgitters 14 gerichtet.

Die Durchschallung des Messrohrs 8 erfolgt schief zur Messrohrachse 16, wobei die Ultraschallwellen unter einem Winkel $\alpha$ zum Lot 21 (Fig. 3) weggebeugt werden und schief zur Messrohrachse 16 vom ersten Ultraschallwandler 24 zum zweiten Ultraschallwandler 25 gelangen.

In der FIG 8a erfolgt keine Spiegelung der Ultraschallwellen, die vom ersten Ultraschallwandler 24 zum zweiten Ultraschallwandler 25 an der ihnen gegenüberliegenden Wand des Messrohrs 8 gesendet werden. In der Zeichnung der FIG 8b sind die Wege 27, 28 der Durchschallung einmal (punktierte Linie 27) bzw. dreimal (gestrichelte Linie 28) im Innern des Messrohrs 8 (Fig. 8a) gespiegelt.

Falls, wie in diesem Beispiel gezeigt, die Ultraschallwandler 24,25 unabhängig davon, ob die Ultraschallwellen einmal oder dreimal gespiegelt werden, in gleicher Distanz D auf dem Messrohr 8 angeordnet sind, weisen die Ultraschallwandler 24, 25 entsprechend angepasste Beugungsgitter 14 (Fig. 1) auf, damit die Ultraschallwellen unter dem erforderlichen Beugungswinkel $\alpha$ bzw. $\beta$ abgestrahlt werden.

Sind jedoch die Beugungsebenen 20 (Fig. 3) der beiden Beugungsgitter 14 parallel und schliessen mit der Messrohrachse 16 (Fig. 8a) einen Azimutwinkel ein, werden die Ultraschallwellen auf ihrem Weg 27 an Wandflächen 29, 30 des Messrohrs 8 zusätzlich gespiegelt, d.h. der Weg 27 durch das Messrohr 8 ist ein schraubenförmiger Polygonzug. Eine parallel zur Messrohrachse 16 gerichtete Komponente des Gittervektors 26 (Fig. 3) des einen Beugungsgitters 14 ist entgegengesetzt zu einer parallel zur Messrohrachse 16 gerichteten Komponente des Gittervektors 26 des anderen Beugungsgitters 14 gerichtet, damit der Ultraschall jeweils empfangende Ultraschallwandler insbesondere bei asymmetrischen Beugungsgittern 14 eine hohe Empfindlichkeit aufweist.

In der Zeichnung der FIG 8b ist dies am Beispiel des gepunktet dargestellten Wegs 27 gezeigt. Der Ultraschall wird unter Winkel $\beta$ zum Lot 21 (Fig. 3) von dem durch den Ultraschallwandler 24 gegen die im Querschnitt sichtbare Wandfläche 29 abgestrahlt. Von dort trifft der Ultraschall nach einer Spiegelung am Boden des Messrohrs 8 auf die im Querschnitt nicht sichtbare Wandfläche 30, die den Ultraschall zum zweiten Ultraschallwandler 25 spiegelt. Der Vorteil einer solchen Führung der Ultraschallwellen ist die genauere Messung der Strömungsgeschwindigkeit durch eine vollständigere Erfassung des Strömungsprofils des Mediums 13 (FIG 8a) im Messrohr 8.

In der Tabelle 2 sind als Beispiel die Gitterkonstanten d, h und die zugehörigen Spatialfrequenzen $d^{-1}$ für die Abstrahlwinkel $\alpha$ = 45,00° und $\beta$ = 63,4° [arctan(1) bzw. arctan(2)] in Wasser von 20°C und die zugehörigen Spatialfrequenzen $d^{-1}$ für den Fall der dreimaligen (Weg 28) bzw. einmaligen (Weg 27) Spiegelung im Messrohr 8 angegeben, wobei das Beugungsgitter 14 für den grösseren Abstrahlwinkel die höhere Spatialfrequenz $d^{-1}$ aufweist. Normalerweise ist das Messrohr 9 nur für eine einzige vorbestimmte Anzahl der Spiegelungen ausgelegt. Die Abstrahlwinkel sind von der Anzahl Spiegelungen im Messrohr 8 und der Distanz D zwischen den beiden Ultraschallwandler abhängig, wobei die Abstrahlwinkel im Bereich von 40° bis 60° bevorzugt werden.

Wenn jedoch ein anderes Medium 13 eingesetzt wird, sind die Gitterkonstanten d, h des Beugungsgitters 14 dem Medium 13 anzupassen. Die Tabelle 2 zeigt als Vergleich die Parameter des Beugungsgitters 14 bei einem Abstrahlwinkel von 45° in das Medium 13 Glyzerin.

Tabelle 1:

| Longitudinale Schallgeschwindigkeit nach Lehfeldt, Ultraschall, Vogel-Verlag 1973, Tabelle Seite 172, ISBN 3-8023-0060-2 | |
| --- | --- |
| Material | Schallgeschwindigkeit |
| Aluminium | 6300 m/s |
| Blei | 2160 m/s |
| Kupfer | 4700 m/s |
| Messing MS 63 | 4400 m/s |
| Stahl unlegiert bis 0,5 % C | 5940 m/s |
| Chromstahl 12 % Cr, 2 % C | 6140 m/s |
| Plexiglas | 2730 m/s |
| Glyzerin von 20°C | 1923 m/s |
| Wasser von 20°C | 1480 m/s |

Tabelle 2:

| Material | Wasser | Wasser | Glyzerin |
| --- | --- | --- | --- |
| Abstrahlwinkel bei 20°C | $\alpha$ = 45,0° | $\beta$ = 63,4° | $\alpha$ = 45,0° |
| Verhältnis der Höhe h zum Abstand d | 1,21 | 1,53 | 0,93 |
| Höhe h | 2,53 mm | 2,53 mm | 2,53 mm |
| Abstand d | 2,1 mm | 1,66 mm | 2,72 mm |
| Spatialfrequenz $d^{-1}$ | 0,48/mm | 0,6 /mm | 0,37/mm |
| Abstrahlwinkel bei 67°C | 47,6° | 69,30° | - - - |

Eine weitere, in den Zeichnungen nicht näher dargestellte Variante könnte derart ausgestaltet sein, dass die beispielsweise in FIG 2 und FIG 5 ausgefüllten Furchen 12 mit einem Schall absorbierenden Material, z.B. Gummi, PVC, PVDF, oder einem Material mit einer stark vom Medium und den anderen Rippen bzw. Furchenmaterial abweichenden Schallimpedanz (z.B. Rippen aus Messing und mit Luft befüllte Furchen). Auf diese Weise entsteht ein Beugungsgitter, bei dem die gleiche Phase an allen Gitterpunkten anliegt, wobei von den Zwischenräumen des Beugungsgitters jedoch kein Schall ausgeht.

Dadurch entsteht zusätzlich zu dem schräg abgestrahltem Schallstrahl ein Schallstrahl, welcher unabhängig von den Gitterkonstanten unter dem Winkel $\alpha$ = 0 ausgesendet wird. Bei optischen Gittern wird dies als Beugungsmaximum nullter Ordnung und der schräg abgestrahlte Strahl als Beugungsmaximum erster Ordnung bezeichnet. Je nach Gitterkonstanten können auch noch Maxima höherer Ordnung auftreten. Dies entspricht dem bereits oben beschriebenen Fall einer Phasenverschiebung von $\phi$ ungleich $\pi$.

In der Regel ist dieser Effekt für die Anwendung bei Ultraschall-Durchflussmesser unerwünscht, da durch den Strahl nullter Ordnung nur Energie verloren geht und eventuell störende Reflexionen auftreten. Dies kann jedoch bei bestimmten Anwendungsfällen, z.B. bei einem Clamp-ON-US-Durchflussmesser (dies ist ein Durchflussmesser, der nicht fest in eine Leitung eingebaut wird, sondern auf eine beliebige Rohrleitung aufgeklemmt wird) vorteilhaft zur Messung des Rohrdurchmesser genutzt werden, da ein Ultraschalldurchmesser in der Regel nur die Strömungsgeschwindigkeit misst und die Durchflussmenge mit Hilfe des normalerweise als bekannt vorausgesetzten Rohrdurchmessers errechnet. Auch für diesen Fall gilt die oben genannte Formel (3), wobei für m alle ganzen Zahlen zulässig sind (m = 0 , 1 , 2 ,3 $\pm$).

Selbstverständlich können einzelne Details der verschiedenen Ausführungen auch vorteilhaft miteinander kombiniert werden, wodurch ggf. auch sinergetische Wirkungen erzielt werden können. Insbesondere sind wesentliche Optimierungen im Bereich der Form und Struktur des Beugungsgitters denkbar. Beispielsweise können die in FIG 3 gezeigten Rippen und Furchen auch abweichend von ihrer dort gezeigten geraden Form auch kreis- oder wellenförmig oder auch unterbrochen ausgeführt sein. Ggf. ist auch eine Säulenstruktur nach Art eines Gebirges zur optimierten Schallabstrahlung denkbar.

Für Anwendungen mit Gasen ist es auch denkbar, dass das Beugungsgitter direkt auf dem Ultraschallerzeuger, insbesondere dem Piezoelement aufgebracht ist. Dazu kann beispielsweise die Elektrode 2 mit der bereits beschriebenen Oberflächenstruktur versehen sein.

Wesentlicher Grundgedanke der vorliegenden Erfindung ist, dass zur schrägen Durchschallung eines Messkanals nicht mehr eine schräge Anordnung des Ultraschallkopfes/Ultraschallwandlers erforderlich ist, sondern dass dieser bei einem geraden Einbau von sich aus den Ultraschall unter einem vorgegebenen Winkel schräg abgibt. Auf diese Weise ist ein kostengünstiger Durchflussmesser realisierbar. Insbesondere bei der Anwendung in gasförmigen Medien ist es denkbar, z.B. direkt nur den Ultraschallerzeuger mit Beugungsgitter direkt in das Medium anzuordnen. Ein komplizierter Einbau in die Wandung des Messrohres erübrigt sich daher. Als Ultraschallerzeuger sind ggf. auch andere Bauteile als das hier aufgezeigte Piezoelement denkbar.

## Patentansprüche

1. Ultraschallwandler zum Abstrahlen von Ultraschall in ein Medium (13), mit einem Ultraschallerzeuger und einer Außenfläche (10a) zur Kontaktaufnahme mit dem Medium, wobei zwischen Ultraschallerzeuger und Außenfläche (10a) oder auf der Außenfläche, ein durch Bereiche unterschiedlicher Schallausbreitungsgeschwindigkeit gebildetes Phasen-Beugungsgitter (14) angeordnet ist, wobei die Bereiche von unterschiedlichen Materialien gebildet sind und das Phasen-Beugungsgitter (14) asymmetrisch ist,
   **dadurch gekennzeichnet, dass** die Bereiche als in das Material der Außenfläche (10a) eingearbeitete, aufeinander abwechselnd folgende Rippen (11) und Furchen (12) ausgebildet sind, die einen keilförmigen Querschnitt aufweisen, zwecks Abstrahlung von Ultraschallwellen mit nicht gleicher Intensität unter Bevorzugung einer Beugungsrichtung.

2. Ultraschallwandler nach Anspruch 1, **dadurch gekennzeichnet, dass** der Ultraschallerzeuger in einem Wandlergehäuse (5) angeordnet ist und in akustischem Kontakt mit einer Gehäusewand (10b) steht, die die Außenfläche (10a) trägt.

3. Ultraschallwandler nach Anspruch 1 oder 2,
   **dadurch gekennzeichnet, dass** der Ultraschallerzeuger als Piezoelement (1) ausgebildet ist, das insbesondere flächig mit der Gehäusewand (10b) in Kontakt steht.

4. Ultraschallwandler nach Anspruch 3, **dadurch gekennzeichnet, dass** das Piezoelement (1) zwischen zwei ungeteilten Elektroden (2; 3) angeordnet ist.

5. Ultraschallwandler nach einem der Ansprüche 1 bis 4, **dadurch gekennzeichnet, dass** das Phasen-Beugungsgitter (14) parallele gekrümmte Furchen (12) aufweist.

6. Ultraschallwandler nach einem der Ansprüche 1 bis 5, **dadurch gekennzeichnet, dass** das Phasen-Beugungsgitter (14) parallele gerade Furchen (12) aufweist.

7. Ultraschallwandler nach einem der Ansprüche 1 bis 6 in Verbindung mit Anspruch 3, **dadurch gekennzeichnet, dass** die Furchen (12) mit einem vom Material der Rippen (11) unterschiedlichen Material aufgefüllt sind.

8. Verwendung eines Ultraschallwandlers nach einem der Ansprüche 1 bis 7 in einem Durchflussmesser (8a) zur Messung der Strömungsgeschwindigkeit eines Mediums (13) mit schiefer Durchschallung eines Messrohrs (8).

9.  Verwendung nach Anspruch 8, **dadurch gekennzeichnet, dass** die Beugungsgitter (14) der Ultraschallwandler (24,25) eine gemeinsame Beugungsebene (20) parallel zu einer Messrohrachse (16) des Messrohrs (8) aufweisen und dass ein Gittervektor (26) des einen Beugungsgitters (14) entgegengesetzt zu einem Gittervektor (26) des anderen Beugungsgitters (14) gerichtet ist.

10. Verwendung nach Anspruch 8, **dadurch gekennzeichnet, dass** die Beugungsgitter (14) parallele Beugungsebenen (20) aufweisen, dass die Beugungsebenen (20) mit einer Messrohrachse (16) des Messrohrs (8) einen Azimutwinkel einschliessen und dass eine parallel zur Messrohrachse (16) gerichtete Komponente eines Gittervektors (26) des einen Beugungsgitters (14) entgegengesetzt zu einer parallel zur Messrohrachse (16) gerichtete Komponente eines Gittervektors (26) des anderen Beugungsgitters (14) gerichtet ist.

11. Ultraschall-Durchflussmesser (8a) mit einem Messrohr (8), an welchem zumindest ein Ultraschallwandler (1a) zum Abstrahlen von Ultraschall in ein Medium (13) angeordnet ist, wobei der Ultraschallwandler einen Ultraschallerzeuger umfasst, der eine Außenfläche zur Kontaktaufnahme mit dem Medium aufweist, wobei der Ultraschallerzeuger ein durch Bereiche unterschiedlicher Schallausbreitungsgeschwindigkeit gebildetes Phasen-Beugungsgitter (14) aufweist, welches zur gerichteten Abstrahlung der Ultraschallwellen in eine vorgegebene Richtung dient und wobei das Phasen-Beugungsgitter (14) asymmetrisch ist,
**dadurch gekennzeichnet, dass** die Bereiche als in das Material der Außenfläche (10a) eingearbeitete, aufeinander abwechselnd folgende Rippen (11) und Furchen (12) ausgebildet sind, die einen keilförmigen Querschnitt aufweisen, zwecks Abstrahlung von Ultraschallwellen mit nicht gleicher Intensität unter Bevorzugung einer Beugungsrichtung.

## Claims

1.  Ultrasonic transducer for emitting ultrasound into a medium (13), comprising an ultrasonic generator and an outer surface (10a) for contacting the medium, wherein a phase diffraction grating (14) is disposed between ultrasonic transducer and outer surface (10a) or on the outer surface (10a), the phase diffraction grating (14) being formed by areas of different speeds of sound propagation, wherein the areas are formed of different materials and the phase diffraction grating (14) is asymmetric, **characterised in that** the areas are alternating ribs (11) and grooves (12) which are worked into the material of the outer surface (10a) and have a wedge-shaped cross-section to achieve an emission of ultrasonic waves of a non-uniform intensity, wherein one direction of diffraction is preferred

2.  Ultrasonic transducer according to claim 1, **characterised in that** the ultrasonic generator is disposed in a transducer housing (5) and is in acoustic contact with a housing wall (10b) which supports the outer surface (10a).

3.  Ultrasonic transducer according to claim 1 or 2, **characterised in that** the ultrasonic generator is a piezoelectric element (1) that is in particular in a surface-to-surface contact with the housing wall (10b).

4.  Ultrasonic transducer according to claim 3, **characterised in that** the piezoelectric element (1) is disposed between two undivided electrodes (2; 3).

5.  Ultrasonic transducer according to one of claims 1 to 4, **characterised in that** the phase diffraction grating (14) has parallel curved grooves (12).

6.  Ultrasonic transducer according to one of claims 1 to 5, **characterised in that** the phase diffraction grating (14) has parallel straight grooves (12).

7.  Ultrasonic transducer according to one of claims 1 to 6 in connection with claim 3, **characterised in that** the grooves (12) are filled with a material that is different from the material of the ribs (11).

8.  Use of an ultrasonic transducer according to one of claims 1 to 7 in a flowmeter (8a) for measuring the flow speed of a medium (13) by means of oblique ultrasonic transmission through a measuring tube (8).

9.  Use according to claim 8, **characterised in that** the diffraction gratings (14) of the ultrasonic transducer (24, 25) have a common diffraction plane (20) parallel to a measuring-tube axis (16) of the measuring tube (8) and that a grating vector (26) of the one diffraction grating (14) is directed opposite to a grating vector (26) of the other diffraction grating (14).

**10.** Use according to claim 8, **characterised in that** the diffraction gratings (14) have parallel diffraction planes (20), **that** the diffraction planes (20) form an azimuth angle with a measuring-tube axis (16) of the measuring tube (8) and **that** a component of a grating vector (26) of the one diffraction grating (14) is directed parallel to the measuring-tube axis (16) but opposite to a component of a grating vector (26) of the other diffraction grating (14), the component also being directed parallel to the measuring-tube axis (16).

**11.** Ultrasonic flowmeter (8a) comprising a measuring tube (8) on which at least one ultrasonic transducer (1a) is disposed for emitting ultrasound into a medium (13), wherein the ultrasonic transducer comprises an ultrasonic generator that has an outer surface for contacting the medium, wherein the ultrasonic generator exhibits a phase diffraction grating (14) formed by areas of different speeds of sound propagation, the phase diffraction grating (14) serving for the directed emission of the ultrasonic waves in a defined direction, and wherein the phase diffraction grating (14) is asymmetric,
**characterised in that** the areas are alternating ribs (11) and grooves (12) which are worked into the material of the outer surface (10a) and have a wedge-shaped cross-section so as to achieve emission of ultrasonic waves of a non-uniform intensity, wherein one direction of diffraction is preferred.

**Revendications**

**1.** Transducteur d'ultrasons permettant l'émission d'ultrasons dans un fluide (13), avec un générateur d'ultrasons et une surface extérieure (10a) permettant l'établissement du contact avec le fluide, un réseau de diffraction de phase (14) étant disposé entre le générateur d'ultrasons et la surface extérieure (10a) ou bien sur la surface extérieure, lequel est formé par des zones à différentes vitesses de propagation du son, les zones étant formées par différentes matières et le réseau de diffraction de phase (14) étant asymétrique, **caractérisé en ce que** les zones sont réalisées en tant que nervures (11) et sillons (12) formé(e)s dans la matière de la surface extérieure (10a) et se suivant successivement en alternance, qui présentent une section cunéiforme pour l'émission d'ondes ultrasonores d'intensité non égale en privilégiant une direction de diffraction.

**2.** Transducteur d'ultrasons selon la revendication 1, **caractérisé en ce que** le générateur d'ultrasons est disposé dans un boîtier de transducteur (5) et se trouve en contact acoustique avec une paroi du boîtier (10b), laquelle porte la surface extérieure (10a).

**3.** Transducteur d'ultrasons selon la revendication 1 ou 2,
**caractérisé en ce que** le générateur d'ultrasons est réalisé en tant qu'élément piézoélectrique (1), lequel est en particulier en contact à deux dimensions avec la paroi du boîtier (10b).

**4.** Transducteur d'ultrasons selon la revendication 3, **caractérisé en ce que** l'élément piézoélectrique (1) est disposé entre deux électrodes non scindées (2, 3).

**5.** Transducteur d'ultrasons selon l'une quelconque des revendications 1 à 4, **caractérisé en ce que** le réseau de diffraction de phase (14) présente des sillons parallèles courbés (12).

**6.** Transducteur d'ultrasons selon l'une quelconque des revendications 1 à 5, **caractérisé en ce que** le réseau de diffraction de phase (14) présente des sillons parallèles rectilignes (12).

**7.** Transducteur d'ultrasons selon l'une quelconque des revendications 1 à 6 en combinaison avec la revendication 3, **caractérisé en ce que** les sillons (12) sont remplis d'une matière différente de la matière des nervures (11).

**8.** Utilisation d'un transducteur d'ultrasons selon l'une quelconque des revendications 1 à 7 dans un débitmètre (8a) servant à mesurer la vitesse d'écoulement d'un fluide (13) avec examen aux ultrasons en biais d'un tube de mesure (8).

**9.** Utilisation selon la revendication 8, **caractérisée en ce que** les réseaux de diffraction (14) des transducteurs d'ultrasons (24, 25) présentent un plan de diffraction commun (20) parallèle à un axe de tube de mesure (16) du tube de mesure (8) et **en ce qu'**un vecteur de réseau (26) de l'un des réseaux de diffraction (14) est orienté de manière opposée par rapport à un vecteur de réseau (26) de l'autre réseau de diffraction (14).

**10.** Utilisation selon la revendication 8, **caractérisée en ce que** les réseaux de diffraction (14) présentent des plans de diffraction parallèles (20), **en ce que** les plans de diffraction (20) forment un angle d'azimut avec un axe de tube de mesure (16) du tube de mesure (8), et **en ce qu'**un composant orienté parallèlement à l'axe du tube de mesure (16) d'un vecteur de réseau (26) de l'un des réseaux de diffraction (14) est orienté de manière opposée par rapport à un composant orienté parallèlement à l'axe du tube de mesure (16) d'un vecteur de réseau (26) de l'autre réseau de diffraction (14).

11. Débitmètre à ultrasons (8a) avec un tube de mesure (8), sur lequel est disposé au moins un transducteur d'ultrasons (1a) permettant l'émission d'ultrasons dans un fluide (13), le transducteur d'ultrasons comprenant un générateur d'ultrasons, lequel présente une surface extérieure servant à établir le contact avec le fluide, le générateur d'ultrasons présentant un réseau de diffraction de phase (14) formé par des zones à différentes vitesses de propagation du son, lequel sert à l'émission orientée des ondes ultrasonores dans une direction prédéfinie et le réseau de diffraction de phase (14) étant asymétrique,
**caractérisé en ce que** les zones sont réalisées en tant que nervures (11) et sillons (12) formé(e)s dans la matière de la surface extérieure (10a) et se suivant successivement en alternance, qui présentent une section cunéiforme pour l'émission d'ondes ultrasonores avec une intensité non égale en privilégiant une direction de diffraction.

**Fig. 1**

**Fig. 2**

**Fig. 3**

## Fig.4

## Fig. 5

## Fig. 6

## Fig. 7

## Fig. 8a

## Fig. 8b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE PS899574 C
- DE S2934031 A
- US PS3555311 A
- WO 8602723 A
- DE OS4010148 A1
- DE 3020282 A1
- GB 2011219 A
- JP 2000304581 A